# EUROPEAN PATENT APPLICATION

(11) **EP 1 798 639 A2**
(43) Date of publication of application: **20.06.2007**
(21) Application number: 06301233.0
(22) Date of filing: 11.12.2006
(51) Int. Cl.: G06F 9/44

(54) **Graphical user interface for generic listing of managed objects**

(30) Priority: 14.12.2005 US 302156
(71) Applicant: Alcatel Lucent, 75008 Paris (FR)
(72) Inventor: HEIDARI, Saied, Ottawa Ontario K1V 1L3 (CA); ENSING, Karen, Carp Ontario K0A 1L0 (CA); TOFINETTI, Michael Nicholas, Kanata Ontario K2M 2C1 (CA); KURUVILLA, Paul, Kanata Ontario K2L 3S6 (CA); HARDWICK, Frances Jean, Ottawa Ontario K2A 2R3 (CA); MARTINEAU, Terrence, Ottawa Ontario K1N 8N9 (CA); KIESEKAMP, David, Merrickville Ontario K0G 1N0 (CA); CRAIG, Robert, Ottawa Ontario K2T 1E2 (CA); PROULX, Lorraine, Kanata Ontario K2W 1B6 (CA)
(74) Representative: Hervouet, Sylvie

(57) **Abstract**

Methods for efficiently filtering and sorting a large number of managed objects of different object types are presented. A single context-sensitive listing form is employed, the operation and display of which changes dynamically according to the selection of a target object. Whenever the user changes the selected target object, the items of a list type menu change to display the applicable list types. An action menu and/or a context-sensitive tool bar changes based on the selected target object to provide quick access selected object type specific actions. The solution allows users to paste objects into the listing form, perform complex filtering based on the object type used, provide a quick assessment of list filtering effectiveness, and invoke appropriate actions on managed object hits. Advantages of the solution include enhanced complex context-sensitive filtering and sorting capabilities, improved performance in dealing with large lists as well a reduction in window management.

## Description

### Field of the invention

The invention relates to managing communications networks via a graphical user interface in a network management context provided by a network management system, and in particular to graphical user interface techniques for filtering, displaying, and exporting data regarding a large number of managed network entities with improved efficiency.

### Background of the invention

Network management systems are employed by network operators to commission, configure, interact with, and decommission field installed equipment.

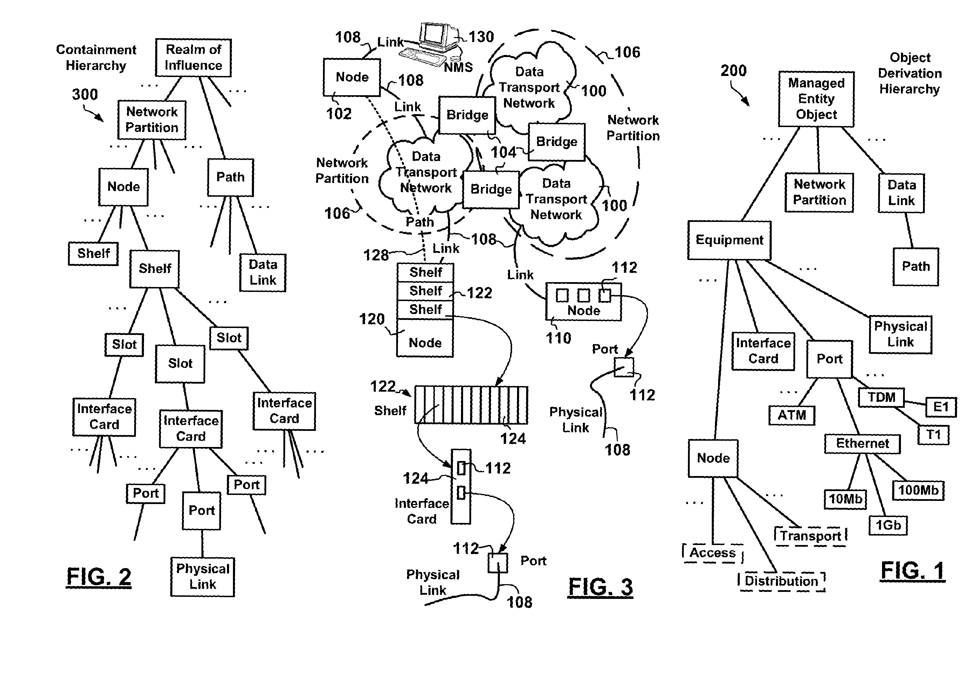

An exemplary manner in which the network operators interact with field installed equipment, employs means provided by the filed installed equipment to interact therewith, wherein the field installed equipment itself, and its configurable subcomponents, whether physical or virtual, are modeled by the network management system and changes to the models or to the field installed equipment are synchronized therebetween. FIG. 1 shows an excerpt of an exemplary model derivation hierarchy 200 based on which models are instantiated at the network management system for each physical and virtual instance employed, each model instance being referred to as a managed object. FIG. 2 shows an excerpt of an exemplary managed object containment hierarchy 300 of model object instances corresponding to field installed equipment of a managed communications network.

Via the network management system, trained management operations and administration personnel interact with the modeled objects and configurations are made to modeled objects. Enabling technologies are employed by the network management system to synchronize the configuration of the modeled objects with the corresponding field installed equipment or subsystems thereof as the case may be. Virtual managed entities include, but are not limited to: network partitions 106, virtual routers, logical ports, logical interfaces, end-to-end data links, paths 128, virtual circuits, virtual paths, etc.; are non-tangible entities some having applicability to at least two field installed entities or subsystems thereof; are also modeled; and model instances are employed for each instance thereof. For the latter, the network management system configures and interacts with corresponding modeled objects while the enabling technologies are employed to configure interfaces on associated field installed equipment or subsystems thereof.

In the current competitive market place experiencing an explosive technological development, network management and service provisioning tasks are complicated by many factors including: multiple communications network equipment vendors having multiple approaches in implementing the communications network equipment; a multitude of data transport technologies, with each vendor specializing in a subgroup of the multitude of data transport technologies; a multitude of network management and service provisioning protocols, with each vendor implementing only a subgroup of the multitude of network management and service provisioning protocols; a multitude of auxiliary network management and service provisioning equipment employing yet another multitude of network management and service provisioning technologies; etc.

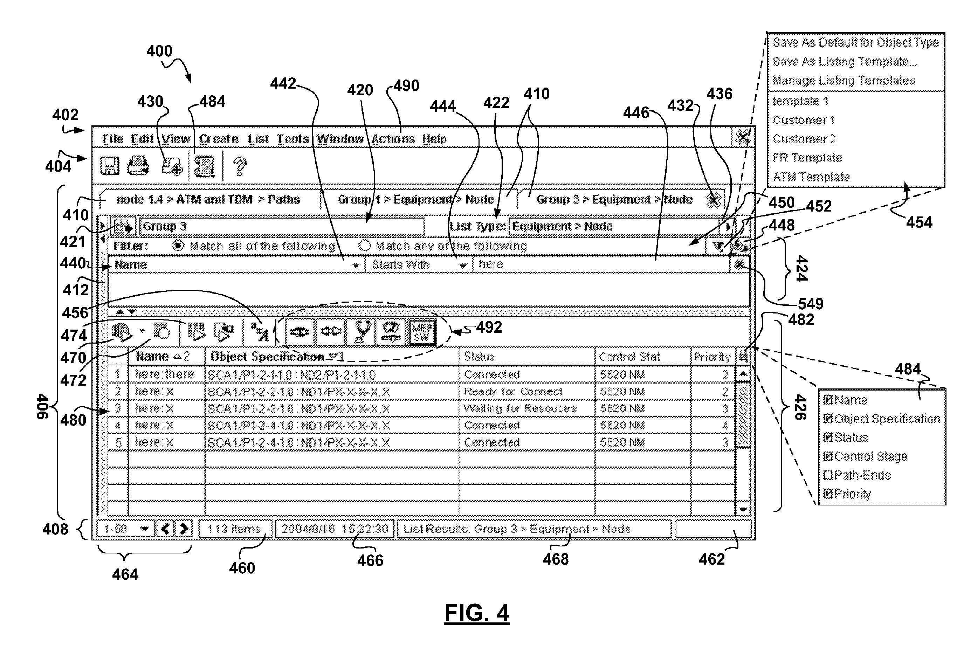

With regards to communications network equipment, for example switching nodes schematically shown in FIG. 3, a vendor may chose to implement an integral device 110 having a data switching processor and a group of ports 112, while another vendor may chose a customizable implementation of a switching node 120 including: a switching fabric, an equipment rack divided into shelves, each shelf 122 having slot connectors for connection with interface cards, each interface card 124 having at least one port 112. Although conceptually the two the switching nodes 110 and 120 provide the same content switching function, each implementation is adapted for a different environment: the former switching node 110 is more adapted to provision enterprise solutions as a private data network node, perhaps further adapted to enable access to public communications services; while the latter switching node 120 is better adapted for high throughput in the core of public (communications) transport networks. Typically the former (110) implements a small number of data transport protocols while for the latter (120), data transport protocols are implemented on interface cards 124 and/or ports 112 - providing for a flexible deployment thereof. All communications network equipment is subject to design choices which are bound to differ from vendor to vendor.

It is a daunting task to provide network management and service provisioning solutions taking into account the permutations and combinations of the elements and technologies mentioned above. Ever-increasing numbers of types of managed objects and object instances themselves have introduced large and increasing management overheads for network operators whom are boking to improve efficiency in interacting with the managed objects. Exemplary interaction with managed objects includes, but is not limited to: listing, filtering, sorting, obtaining data about, and exporting data regarding objects. Such interactivity is frequently used by network operators and therefore in need for improvement.

Prior art approaches to providing network management and service provisioning solutions include the coding of an inordinate number of managed object specific graphical user interface windows addressing listing, filtering, sorting, etc. aspects in respect of each of the multitude of network entities. Coding, deploying, maintaining, and extending such software applications for network management and service provisioning has been and continues to be an enormous undertaking as well as an extremely complex one. Such software applications require a large number of man-hours to create, do not benefit from code reusability, frequently are delivered with numerous problems, and are difficult to modify and/or support. There is always a risk of causing errors in existing code when maintaining such software thereby requiring extensive regression testing to verify the integrity of the code deployed. Such large programming efforts suffer in erms of reasonable performance, reliability, cost of development, and reasonable development cycles. And, last but not least, employing such a multitude of windows also requires extensive operation management personnel training.

Currently network operators perform managed object listing by launching a new listing window in order to generate each new list type. Each graphical user interface window opened must be closed at a later time. Current means for getting from one such window of interest to another include minimizing all windows, expanding selective windows, and cascading windows. The proliferation of windows leads to decreased productivity as valuable time is spent on managing windows displayed on network management system graphical user interfaces.

As managed communications networks grow more complex, network operators are less and less able to identify managed entities of interest. Also, current implementations only allow a determination as to whether a particular listing functionality invoked is adequate after the listing functionality invoked completes.

Network operators are looking to improve network management and service provisioning productivity in interacting with the above mentioned managed objects taking into account the above mentioned network management and service provisioning complexities.

### Summary of the invention

In accordance with an aspect of the invention, a generic graphical user interface for identifying a multitude of managed objects corresponding to a multitude of field installed managed entities of a communications network and for interacting therewith in a communications network management and service provisioning context brokered via a network management system is provided. The graphical user interface includes a context sensitive listing pane and a menu bar. The context sensitive listing pane for listing managed objects includes: target object specification means for specifying the scope of a list of managed objects to be obtained; a list type specifier for selecting a managed object type for the managed objects in the list to be obtained; a filter pane for optionally specifying filtering criteria for refining the list of managed objects to be obtained; listing functionality invocation means for obtaining the list of managed objects; and, a results pane for displaying the list of managed objects obtained from one of a managed object server and a network management database. The menu bar provides access to graphical user interface functionality, the menu bar including at least one context sensitive menu having at least one list-type-selection-specific menu item providing selective access to listed managed-object-specific functionality.

In accordance with another aspect of the invention, a method of identifying a multitude of managed objects corresponding to a multitude of field-installed managed entities of a communications network and for interacting therewith in a communications network management and service provisioning context brokered via a network management system via a generic graphical user interface to the network management system. The method includes: selecting a target managed object defining the scope of a list of managed objects to be obtained; determining a group managed object list types corresponding b the target managed object selection; selecting a managed object list type defining the type of managed objects to be listed; optionally specifying filter criteria for refining the list of managed objects to be obtained; displaying managed object list results obtained from one of a managed object server and a network management database; and providing selective access to listed managed-object-specific functionality via at least one menu item of a context sensitive menu of the generic graphical user interface.

Advantages are derived from an enhanced usability through contextual filtering and sorting capabilities and improved performance in manipulating large managed object lists, exporting list results, and an increase in the operator inefficiency through a reduction in operator window management.

### Brief description of the drawings

The features and advantages of the invention will become more apparent from the following detailed description of the exemplary embodiment(s) with reference to the attached diagrams wherein:
**FIG. 1** is a schematic diagram showing a managed entity object hierarchy used in an exemplary network management and service provisioning context;
**FIG. 2** is a schematic diagram showing an managed entity containment hierarchy used in the exemplary network management and service provisioning context;
**FIG. 3** is a schematic diagram showing communications network entities deployed in an exemplary managed communications network;
**FIG. 4** is a schematic diagram showing an exemplary implementation of a graphical user interface associated with a client software application employed in a network management and service provisioning context, in accordance with an exemplary embodiment of the invention;
**FIG. 5** is another schematic diagram showing another exemplary implementation of the graphical user interface associated with a client software application employed in a network management and service provisioning context, in accordance with the exemplary embodiment of the invention;
**FIG. 6** is a flow diagram showing process steps implementing context sensitive listing functionality in accordance with the exemplary embodiment of the invention; and
**FIG. 7** is yet another schematic diagram showing yet another exemplary implementation of the graphical user interface associated with a client software application employed in a network management and service provisioning context, in accordance with the exemplary embodiment of the invention.

It will be noted that in the attached diagrams like features bear similar labels.

### Detailed description of the embodiments

In view of the above described inefficiencies, window management overhead reductions, improved context sensitive filtering flexibility, interruptible listing functionality, providing an ability to judge whether list/filtering is adequate, and improved context sensitive sorting flexibility would go a long way towards addressing current network operators' needs.

In accordance with a preferred embodiment of the invention, improvements are made to a graphical user interface listing window and the software application provisioning the improved graphical user interface listing window. The improved graphical user interface listing window presented, hereinafter the generic listing window for short, is used by operations management personnel as a client typically to a managed object server and/or a network management database, the managed object server executing managed object methods, the network management database storing managed object attributes. The features, contents, and operation of either the managed object server and/or the network management database are described elsewhere and are beyond the scope of the present description. Suffice it to say that the managed object server and/or the network management database respond to queries issued by the client application provisioning the improved graphical user interface listing window, hereinafter the generic listing application for short.

In accordance with the exemplary embodiment of the invention, the listing window is provided as a common graphical user interface for accessing listing functionality for multiple types of lists filtered based on a scalable set of filter options.

FIG. 4, FIG. 5 and FIG. 7 show, in accordance with the exemplary embodiment of the invention, respective exemplary implementations 400 and 500 of generic listing windows displayed by corresponding generic listing applications. The generic listing window 400/500 is launched by interacting with the network management system 130. Without limiting the invention, launching the generic listing window 400/500 is effected: by express command line invocation; by interacting with a network management system graphical user interface widget (icon) designated for launching a generic listing window; from a window menu of another network management system application for example by selecting a list menu item, by interacting with an equivalent button, or by pressing the equivalent (accelerator) keyboard shortcut; interacting with a toolbar icon; interacting with a list menu item in a contextual menu; via a menu item of a contextual menu associated with a selected managed object in an application displaying iconical representations of managed objects (e.g. maps) or managed object lists; etc. A generic listing window 400/500 may also be spawned (launched) from within an active generic list window 400/500.

In accordance with the exemplary embodiment of the invention, the primary pane (400/500) of a generic listing window 400/500 includes: a menu bar 402, a list toolbar 404, a list pane 406, and a status bar 408. The tool bar 404 typically provides easy access to most used menu (402) items and may be selectively disabled.

In accordance with the exemplary embodiment of the invention, the list pane 406 can contain multiple tabbed list panes 406 residing within the same generic list window 400/500, each tabbed listing pane 406 relating to a different list. Tabbed listing panes 406 appear to share the same desktop space minimizing spawning multiple listing windows in perform multiple listing operations concurrently. With the positioning of the multitude of listing panes 406 restricted within the generic listing window 400/500, tabs 410 provide the means for switching between each one of the multitude of generic listing panes 406. Simultaneous display of multiple generic listing panes 406 is provided via the use of a split pane enabling adjustment of the relative size of list panes 406 via a draggable splitter bar 412.

A new tabbed list pane 406 is created via a "new tabbed list pane" menu (402) item or via a special purpose "new tabbed list pane" button 430 on the list toolbar 404. An existing tabbed list pane 406 is closed by interacting with a special purpose destructor widget 432 on the corresponding tab 410 thereof.

In accordance with an exemplary implementation of the exemplary embodiment of the invention, a "query-in-progress" icon 434 is displayed in the tab 410 of a tabbed list pane 406 during the period of time the corresponding list is being compiled (i.e. the client generic listing application 400/500 is querying the managed object server/network management database and/or as list results are being received). Without limiting the invention, an exemplary icon includes animated arrows appearing to move in circle. The display of the query-in-progress icon 434 provides a visual indication of a query in progress particularly in the case in which the corresponding tabbed list pane 406 is not visible.

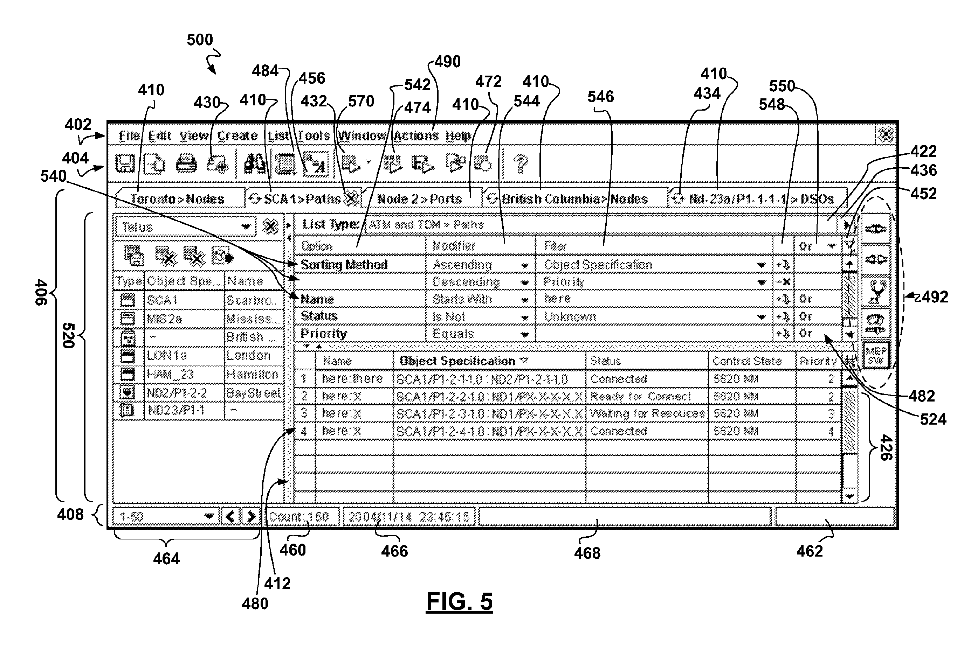

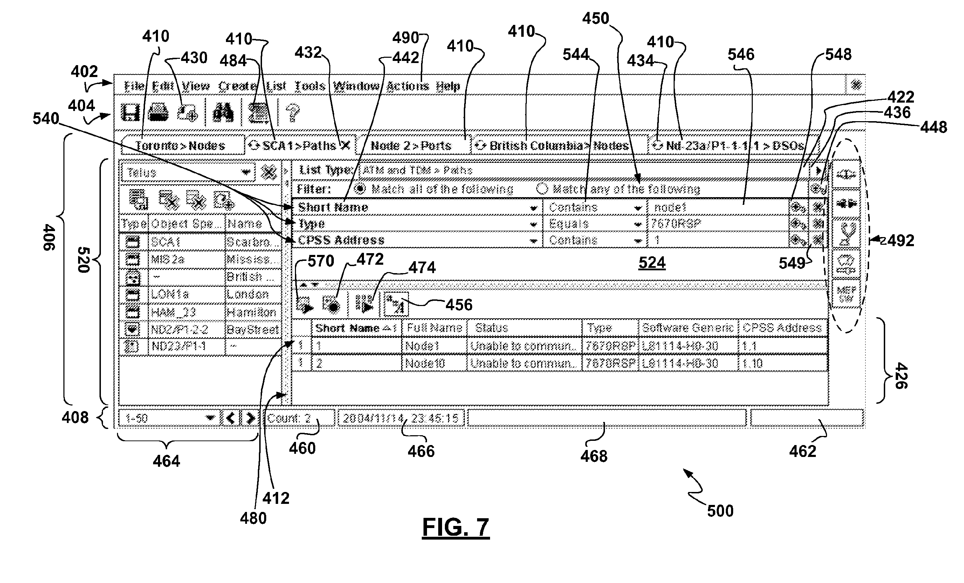

Each list pane 406 includes: a target managed object selector 420, a list type selector 422, a filter pane 424/524, and a results pane 426. In accordance with an exemplary implementation of the exemplary embodiment of the invention, the list pane 406 further includes a range of objects pane 520 shown in FIG. 5 and FIG. 7 as an alternative to the target object selector 420 for effecting managed object selection. The range of objects pane 520 contains user created lists of target managed objects of interest. When an item in the range of object pane 520 is selected, it becomes the new target managed object selection for the current tabbed list pane 406. The range of objects pane 520 may be selectively shown by interacting with a menu (402) item or directly manipulating a slider pane.

If a new generic listing window 400/500 is launched, with no managed object being selected in the network management and service provisioning context, all data entry fields of the generic listing window 400/500 will be empty, except perhaps the list type selector 422 - in order to consolidate overall functionality, the list type selector 422 may contain options for list types which do not relate to managed objects such as, but not limited to: ongoing processes, saved templates, etc.

The target object selector 420 includes a paste-in button 421 and a read-only field displaying a human-readable managed object specification of the managed object defining the scope of the list. Making reference to the above mentioned exemplary ways in which the generic listing window 400/500 may be launched, whenever the generic listing window 400/500 is launched with a managed object selected in the network management and service provisioning context, the target object selector 420 is populated with the selected managed object human readable specification based on a corresponding managed object identifier and/or network management database identifier. The invention is not limited to invoking listing functionality on an elemental managed object - complex managed objects such as network partitions and equipment racks represent groupings of managed objects which can be pasted in the target object selector 420 at once via the specification/selection/pasting-in of the corresponding complex managed object.

In accordance with the exemplary embodiment of the invention, the list type selector 422 displays a currently active list type. The list type selector 422 includes a list type selection button 436 for accessing a context-sensitive menu containing a group of list types corresponding to the target managed object(s) selected in the target managed object selector 420. The list type selection menu may contain submenus and/or hierarchical menus employed for organizing list type options.

In accordance with an exemplary implementation of the exemplary embodiment of the invention, if the list type selection was made from a submenu, the level of the list type selection in the related menu hierarchy is displayed. For example FIG. 4 shows the target managed object being a network partition "Group 3" and the selected list type being "Equipment > Node" wherein communications network (equipment) node managed objects in the network partition "Group 3" are to be listed. Such a hierarchical menu may either be specified in a list type menu specification or generated. For the example the managed object derivation hierarchy 200 presented in FIG. 1 can serve as the specification for the exemplary list type selection menu mentioned whereas the containment hierarchy 300 can serve as a generator.

Simply put, the combination of the list type specification 422 and the target manage object specification 422 respectively specify what managed objects to look for and the scope of the search.

The filter pane 424/524 enables management operations personnel to specify filtering criteria to be used in filtering hits as list results are generated. In accordance with an exemplary implementation of the exemplary embodiment of the invention, the filtering criteria is provided to the managed object server/network management database performing the search such that all search and filtering functionality is performed at, and by, the managed object server/network management database thereby reducing overheads otherwise incurred in conveying unwanted search hits to the client generic listing application (400/500) and further reducing performance requirements of network management workstations executing client generic listing application code and displaying the generic listing window 400/500. The resource utilization reductions are particularly important as management operations personnel expects to consult a multitude of managed object lists (interact with multiple tabbed list panes 406) substantially at the same time.

In accordance with an exemplary implementation of the exemplary embodiment of the invention, the filter pane 524 (424), shown in more detail in FIG. 5, includes a filtering information table having filter specification rows 540 (440). Each filter row 540 (440) having fields for specifying a managed object attribute/option 542 (442), a modifier 544 (444), a filter specifier 546 (446) for specifying an attribute or a value, an add filter row button 548 (448) and a remove filter row button (549).

List results are displayed in the results pane 426. Result rows 480 in the results pane 426 display information about managed objects that match the listing criteria 422 subject to the filter criteria 424 within the context of the target managed object specification 420/520. In accordance with the exemplary embodiment of the invention, the group of displayable columns depends on the list type specification 422. After a list type 422 is selected 606, corresponding attribute columns are displayed in the results pane 426 in accordance with the list type selection 606.

In accordance with the exemplary embodiment of the invention, by default a default filter row 440/540 is provided in the filter pane 424. The attribute associated with the default filter row 440/450 is one of the set of attributes/options associated with the list type selection 606. The option/attribute field 442/542 of each filter row 440/530 for example contains a combo box with attribute/option selections to be associated therewith. Additional filtering criteria can be specified via additional filter rows 540/440. An additional filter row 440/540 can be added to the filter pane 424/524 by interacting with an add filter row button 448 after specifying the attribute on which the additional filtering is to be performed. Specifying the attribute on which the additional filtering is to be performed may include, but is not limited to, selecting a column header in the results pane 426. A filter row 540 can also be added by using an add filter row button 548 on a filter row 540 which adds another filter row 540 with the same option/attribute 542 as the filter row 540 whose add filter row button 548 was interacted with. A filter row 440/540 can be removed by clicking the remove filter row button 549 on the corresponding filter row 440/540. If all filter rows 440/540 are removed from the filter pane 424 a full listing of all managed objects specified by the list type 422 in the scope of the selected target managed object 420 is requested.

The number of hits can be limited by: activating filter rows 548, by specifying 550 either an exclusive or an inclusive relevance of attribute values, by specifying modifiers 444/544 and filter specifier 446/546 fields, etc.

In accordance with an exemplary implementation of the exemplary embodiment of the invention shown in FIG. 4 and FIG. 7, the desired exclusive "AND" or the inclusive "OR" relevance of attribute value s is specified in respect of all attributes on which filtering is being performed. In accordance with another exemplary implementation of the exemplary embodiment of the invention shown in FIG. 5 the desired exclusive "AND" or the inclusive "OR" relevance of attribute values is specified in respect of each filter row 540 and the attribute/option 542 thereof.

The selection/specification of an option/attribute in field 442/542 causes the corresponding default modifier 444/544 and filter specifier 546/446 fields to be displayed.

Each modifier field 544/444 contains a combo box with choices relating the option/attribute field 542/442 specification. Modifier field choices would typically include: "Equals", "Is Not", "Between", "Greater Than", "Less Than", etc for an attribute specification having numeric values. For example, for a Name attribute 542 having sting values, the modifier field choices are "Is", "Is Not", "Starts With", and "Contains". The default modifier selection 544/444 would typically be "Is/Equals" or equivalent, the most common setting.

The filter specifier field 546/446 enables operations management personnel to specify filtering criteria which can include, without limiting the invention: attribute specifications, attribute values, etc. Means are provided for entering wild cards and value rangers in specifying filtering criteria.

If the case sensitive query button 456 is activated, all textual filter criteria are treated as case sensitive when generating managed object lists.

In accordance with the exemplary embodiment of the invention, means are provided for management of filtering information. Clicking on a filter template widget 452 shown in FIG. 4 and FIG. 5 opens a filter templates menu 454 providing access to filter template manipulation functionality. A filter template includes filtering criteria specified in the filter pane 424/524 in respect of managed objects specified via the list type specification 422 (irrespective of the target managed object selected). Filter templates may be saved and retrieved. When the filter template menu 454 is opened, the generic listing application (400/500) lists any saved templates that correspond to the current list type. When a template is chosen, the filter rows 540 (440) in the filter pane 424 are populated with the filtering criteria retrieved.

In accordance with the exemplary embodiment of the invention, means are further provided for managing filter templates and in particular for populating a filter templates menu 454 with available filter templates corresponding to managed objects specified via the list type specification 422. Means are provided for saving the current filter criteria as a default filter for subsequent invocation of the current list type.

Once the filtering criteria have been specified, managed object lists can be created by interacting with menu items of a list menu of the generic listing window 400/500 or via corresponding list making buttons. Creating managed object lists includes a coordinated interaction between the client generic listing application (400/500) and the managed object server/network management database wherein messages and queries relating to list making criteria including: the target managed object specification 420, the list type specification 422, and the filtering criteria specified in the filter pane 424/524, are sent by the client generic listing application (400/500) along perhaps with an indication of the expected format of the results.

In accordance with an exemplary implementation of the exemplary embodiment of the invention shown in FIG. 5, one of the filter rows 540, perhaps the first one in the filter pane 524, relates to a "sort method" option 542, while the filter specifier field 546 is used to specify an attribute on which sorting of the list results is to be performed, and the modifier field 544 is used to specify sorting choices such as "ascending" and "descending". Pre-specifying the results sorting takes advantage of the processing capabilities of the managed object server and/or the network management database and ensures that the most desired results are displayed first in the results pane 426 which is particularly useful when paginated lists are requested (see below).

The status bar 408 provides more detailed information regarding the status of the listing job for the "in-focus" tabbed list pane 406 than otherwise is displayed on the tabbed list pane tab 410. In accordance with an exemplary implementation of the exemplary embodiment of the invention, the status bar 408 includes: a hits count specifier 460, a progress bar 462, pagination controls 464, a date/time specifier 466, and a status specifier 468.

In accordance with the exemplary embodiment of the invention, interacting with any of the make list buttons 470/570, besides invoking managed object server/network management database searches for managed objects in accordance with list making criteria as described hereinabove, includes requesting a tally of the total number of hits to be sent in advance of sending the search results. The hits count specifier 460 displays the total number of hits providing an early assessment of the adequacy of the list. In looking for a (few) specific managed object(s), a hits count three magnitudes larger would perhaps imply that more filtering is needed and that perhaps the current job needs to be interrupted before a lot of resources are expended. The "stop list" button 472 is employed for this purpose. Alerts may be automatically provided if the results exceed a certain number selected to specify the largest reasonable number of results acceptable. In accordance with another implementation of the exemplary embodiment of the invention a "count" button 474 is provided for requesting the tally of the total number of managed objects matching the listing criteria without any of the results.

Having determined that the results are worth waiting for, the progress bar 462 provides a level of assurance that the results are being compiled.

When a "make paginated list" is invoked, for example by interacting with the "make paginated list" button 470, the pagination controls 464 provide means for selectively displaying paginated results. The pagination controls 464 provide for the selection of a particular results page of a predetermined number of results, for progressing to the next page, and respectively for retrogressing back to the previous page; each results page having an adjustable number of displayable results. The pagination controls 464 further display the range of results displayable on the current page. An "All" range specifies that all results, the total count of which is displayed via the hits count specifier 460, are being displayed. The "All" range is the default selection in interacting with the "make entire list" button 570, the "All" range representing a valid selection irrespective of which make list button 470/570 was interacted with.

The status specifier 468 provides feedback on the overall status of operations of the generic listing application 400/500 such as, but not limited to: processing state, details on the current selection, tool tips, etc.

The date & time specifier 466 displays a date & time stamp associated with the creation of the list containing the results. In view of the highly dynamic nature of communications networks, the association of the data/time stamp is a loose one as the expressible granularity of the date/time stamp value may be far greater than the length of time it would take for all results in the list to be compiled.

In displaying results in the results pane 426, a default subgroup of columns may be specified for display in respect of a given list type (422). Without limiting the invention thereto, each results column relates to an attribute of the managed objects listed (422). If additional filters are added, corresponding columns are added to the results table 426. The display of each column can be turned on or off, for example by interacting with a column chooser widget 482 activating a column chooser menu 484. The horizontal ordering of the columns can be rearranged by dragging a column header to its new position in the table.

Obtained results, and therefore listed managed objects, can be sorted by column heading (e.g. Name, Type, Status, etc.) for example by clicking on corresponding column headers. Clicking a second time reverses the sorting order for that column. An arrow icon is provided in the column header of each column, the arrow icon's orientation (pointing up or down) corresponds to the sort order, if any, as shown in FIG. 4.

In accordance with the exemplary embodiment of the invention, multiple column sorting is provided, the sort precedence between columns being displayed h column headers as shown in FIG. 4.

In accordance with an exemplary implementation of the exemplary embodiment of the invention shown in FIG. 7, as the attribute columns are displayed in the results pane 426 after the list type selection 422 is made 606, the desired multiple column sorting and sort precedence may be specified before, and for, list making functionality invocation (470/570).

Managed objects in the list are selectable by clicking on corresponding rows 480. In accordance with the exemplary embodiment of the invention, right clicking on a list result row item (or other equivalent interaction therewith) selects the list item and opens a contextual menu. The contextual menu (490) provides access to commands associated with the corresponding managed object type.

In accordance with another exemplary implementation of the exemplary embodiment of the invention, a contextual "Actions" menu 490 on the menu bar 402 is updated to provide access to actions for the managed objects corresponding to the list type selection 422. For example, "Connect" and "Disconnect" could appear as actions for a list of paths, but would not appear on a list of nodes.

In accordance with another exemplary implementation of the exemplary embodiment of the invention, a contextual actions tool box 492 displays action buttons corresponding to menu items of the actions menu 490. In FIG. 4, for example, the placement of the contextual actions tool box buttons may follow the list functionality invocation buttons 470/472/474. In FIG. 5 and FIG. 7 contextual actions tool box 492 is shown to the right of the filter 524 and list results 426 panes.

Each list type has specific actions that can be performed on the managed objects in the list results pane 426. The buttons of the actions tool box 492 are updated according to the list type either as soon as the list type is selected (422), as soon as the first result is displayed, or whenever a list item is selected. The action corresponding to each action button is performed when at least one object is selected, unless the action is an "All" action, such as the "Disconnect All" action. If no action exists for a given list type, the actions tool box 492 is empty.

Means are provided, in the network management and service provisioning context, for identifying selected managed objects in a map of the managed communications network, such as exemplary shown in FIG. 3, revealing each managed object's location in the overall containment hierarchy 300.

Means are provided for saving managed object lists in a file format enabling the loading thereof into the generic listing application (400/500). The saved results file may also specify listing criteria including: the target managed object specification (420), the list type specification (422), the filtering criteria (424/524), and the data & time specification 466. When a list file is loaded the creation date & time stamp specified is used to populate field 466.

Means are provided for exporting the search results into a number of file formats e.g. HTML, XML, text (tab, coma, space delimited) which can be used to import the managed object list results into other applications.

Means are provided for retaining a trace of lists generated. The list trace information relates to stored lists as well as to active in other tabbed list panes 406. A history button 484 is provided for invoking list trace functionality.

In accordance with the exemplary embodiment of the invention, for ease of use and greater operator efficiency, the display and operation of the list pane 406 changes dynamically with selection of the target object (420) and the list type (422). When the target object changes (420), the list type menu items (422) change to display the applicable list types. Additionally, the various elements of the list pane 406 are context sensitive, in particular managed object specific action buttons are provided in a contextual actions menu 490 and contextual tool box 492 providing access to managed object specific actions.

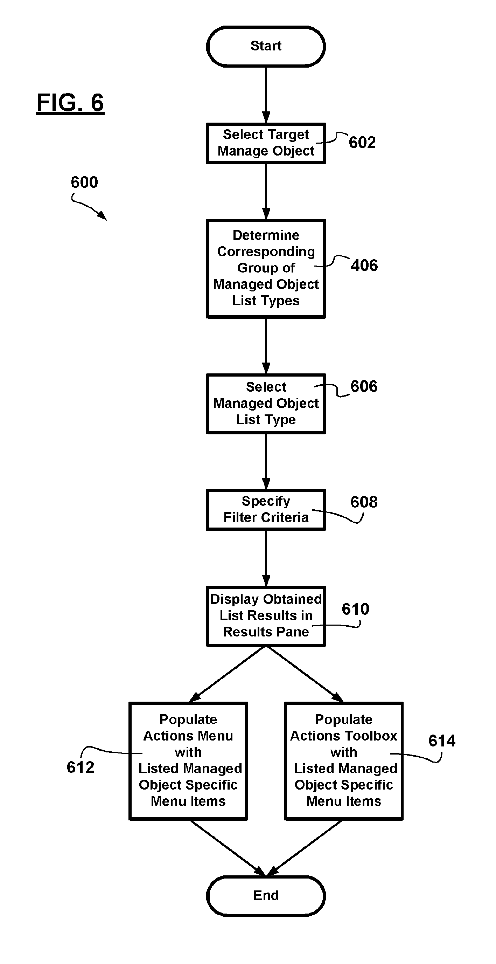

In accordance with the exemplary embodiment of the invention, a method 600 of identifying managed objects corresponding to field-installed managed entities of a communications network in a communications network management and service provisioning context brokered via a network management system via a generic graphical user interface to the network management system is shown in FIG. 6.

A target managed object is selected 602 defining the scope of a list of managed objects to be obtained. A group managed object list types corresponding to the target managed object selection is determined 604. A managed object list type defining the type of managed objects to be listed is selected 606. Filter criteria for refining the list are optionally specified 608. Once managed object list results are obtained from either the managed object server and the network management database, the results are displayed 610 in the results pane 426. The context sensitive menu 490 of the generic graphical user interface 400/500 is populated 612 with listed managed-object-specific functionality menu items. Selective access is provided 614 to context sensitive menu items.

FIG. 7 shows yet another exemplary graphical user interface in accordance with the exemplary embodiment of the invention.

Advantages are derived from an enhanced usability through contextual filtering and sorting capabilities and improved performance in manipulating large managed object lists and exporting list results.

The embodiments presented are exemplary only and persons skilled in the art would appreciate that variations to the above described embodiments may be made without departing from the spirit of the invention. The scope of the invention is solely defined by the appended claims.

## Claims

1. A generic graphical user interface for identifying a plurality of managed objects corresponding to a plurality of field installed managed entities of a communications network and for interacting therewith in a communications network management and service provisioning context brokered via a network management system, the graphical user interface comprising:
a. a context sensitive listing pane for listing managed objects further comprising:
i. target object specification means for specifying the scope of a list of managed objects to be obtained;
ii. a list type specifier for selecting a managed object type for the managed objects in the list to be obtained;
iii. a filter pane for optionally specifying filtering criteria for refining the list of managed objects to be obtained;
iv. listing functionality invocation means for obtaining the list of managed objects; and
v. a results pane for displaying the list of managed objects obtained from one of a managed object server and a network management database; and
b. a menu bar providing access to graphical user interface functionality, the menu bar including at least one context sensitive menu having at least one list-type-selection-specific menu item providing selective access to listed managed-object-specific functionality.

2. A graphical user interface as claimed in claim 1, wherein the graphical user interface comprises a plurality of context sensitive listing panes, the graphical user interface comprising a split pane for selectively displaying the plurality of context sensitive listing panes, the split pane having a splitter bar for selectively displaying at least one visible context sensitive listing pane.

3. A graphical user interface as claimed in claim 2, wherein each one of the plurality of context sensitive listing panes comprises a tabbed context sensitive listing pane having a tab identifying the corresponding context sensitive listing pane, interacting with the context sensitive listing pane tab bringing the corresponding context sensitive listing pane into focus.

4. A graphical user interface as claimed in claim 3, wherein the context sensitive listing pane tab further comprises:
a. a context sensitive listing pane desctructor widget for closing the corresponding context sensitive listing pane; and
b. a progress status indication widget for indicating whether compiled list results of the managed object list are still in the process of being obtained irrespective of whether the corresponding context sensitive listing pane is visible.

5. A graphical user interface as claimed in claim 1, wherein the target object specification means further comprises a target managed object specifier for specifying a target managed object defining the scope of the list of managed objects to be obtained.

6. A graphical user interface as claimed in claim 5, wherein the target managed object specifier further comprises a paste-in button for specifying the target managed object, and a human-readable managed object specification field for displaying a human-readable specifier associated with the selected target managed entity.

7. A graphical user interface as claimed in claim 5, wherein the target managed object specifiable via the target object specifier is one of an elemental target managed object and a complex target managed object, the elemental target managed object corresponding to a single field installed managed entity, the complex target managed object corresponding to a group of a plurality of field installed managed entities.

8. A graphical user interface as claimed in claim 1, wherein the target object specification means further comprises a range of objects pane for displaying therein a list of target managed objects of interest, the selection of an element from the displayed list of target managed objects specifying the scope of the list of managed objects to be obtained.

9. A graphical user interface as claimed in claim 1, wherein the list type specifier further comprises a context sensitive menu providing a selected target-managed-object-dependent group of managed object types.

10. A graphical user interface as claimed in claim 1, wherein the filter pane further comprises a context sensitive tabulated list of filter criteria including at least one filter row for an attribute associated with managed objects specified via the list type specifier.

11. A graphical user interface as claimed in claim 10, the filter pane being further configured to cause one of selectively adding, and selectively deleting, a filter row for each attribute associated with managed objects specified via the list type specifier.

12. A graphical user interface as claimed in claim 11, the filter pane being further configured to cause one of saving filter criteria as default filter criteria for the type of managed objects currently specified via the list type specification, storing filter criteria for the type of managed objects currently specified via the list type specification, loading filter criteria for the type of managed objects currently specified via the list type specification.

13. A graphical user interface as claimed in claim 1, wherein the listing functionality invocation means further comprises one of an obtain a hits count button, a make entire list button, a make paginate list button, and a stop list button.

14. A graphical user interface as claimed in claim 1, wherein the results pane displays a tabular representation of the list of managed objects obtained, the results pane further comprising a context sensitive results pane configured to cause the selective display of a group of list-type-specified managed-object-specific attribute columns.

15. A graphical user interface as claimed in claim 1, further comprising a hits count field displaying a number of managed objects in one of the managed object server and the network management database, managed objects specified via the list type specifier in the scope of the target managed object selection and matching the filtering criteria specified in the filter pane, the hits count being displayed before the compiled list of managed objects is obtained.

16. A graphical user interface as claimed in claim 1, further comprising a context sensitive actions toolbar having at least one list-type-selection-specific button providing selective access to listed-managed-object-specific functionality.

17. A method of identifying a plurality of managed objects corresponding to a plurality of field-installed managed entities of a communications network and for interacting therewith in a communications network management and service provisioning context brokered via a network management system via a generic graphical user interface to the network management system, the method comprising:
a. selecting a target managed object defining the scope of a list of managed objects to be obtained;
b. determining a group managed object list types corresponding to the target managed object selection;
c. selecting a managed object list type defining the type of managed objects to be listed;
d. optionally specifying filter criteria for refining the list of managed objects to be obtained;
e. displaying managed object list results obtained from one of a managed object server and a network management database; and
f. providing selective access to listed managed-object-specific functionality via at least one menu item of a context sensitive menu of the generic graphical user interface.

18. A method as claimed in claim 17, wherein selecting a target managed object further comprises pasting- in a managed object identifier.

19. A method as claimed in claim 18, wherein pasting-in the managed object identifier comprises pasting-in one of a managed object server identifier and a network management database identifier.

20. A method as claimed in claim 17, further comprising invoking listing functionality for obtaining the list of managed objects.

21. A method as claimed in claim 20, wherein invoking listing functionality further comprises:
a. submitting a query to one of the managed object server and the network management database, the query including the target managed object specification, the list type specification, and the filter criteria; and
b. receiving the managed object list results.

22. A method as claimed in claim 21, wherein prior to receiving the managed object list results, the method further comprises receiving a hits count specifying the total number of managed objects in one of the managed object server and the network management database, managed objects specified via the list type selection in the scope of the target managed object selected and matching the filter criteria.

23. A method as claimed in claim 22, wherein invoking the listing functionality further comprises one of requesting the hits count, all results, requesting a subset of the results, and terminating a previous request.

24. A method as claimed in claim 17, wherein determining the group managed object list types corresponding to the target managed object selection the method further comprises:
a. consulting a specification of a managed object derivation hierarchy to obtain managed objects derived from the selected target managed object; and
b. providing a managed object list type selection for each derived managed object.

25. A method as claimed in claim 17, wherein subsequent to selecting a managed object list type defining the type of managed objects to listed, the method further comprises providing a context sensitive filter row of a tabular filter criteria representation for an attribute of the type of managed objects specified via the list type selection.

26. A method as claimed in claim 25, further comprising one of selectively adding and selectively deleting a filter row.

27. A method as claimed in claim 25, further comprising one of saving filter criteria as default filter criteria for the type of managed objects currently specified via the list type specification, storing filter criteria for the type of managed objects currently specified via the list type specification, loading filter criteria for the type of managed objects currently specified via the list type specification.

28. A method as claimed in claim 17, wherein displaying the managed object list results obtained, a results pane displays a context sensitive tabular representation of the obtained list of managed objects, the method further comprising selectively displaying a group of list-type-specified managed-object-specific attributes in corresponding columns.

29. A method as claimed in claim 28, further comprising one of selectively removing and adding list-type-specified managed-object-specific attribute columns to the tabular representation of the listed results.

30. A method as claimed in claim 17, further comprising selectively saving and selectively retrieving managed object list results.

31. A method as claimed in claim 17, further comprising providing selective access to listed managed-object-specific functionality via a context sensitive actions toolbar having at least one list-type-selection-specific button providing selective access to listed-managed-object-specific functionality.
